# NEW EUROPEAN PATENT SPECIFICATION

(11) **EP 0 300 509 B2**
(45) Date of publication and mention of the opposition decision: **02.09.1998**
(45) Mention of the grant of the patent: 14.12.1994
(21) Application number: 88111964.8
(22) Date of filing: 25.07.1988
(51) Int. Cl.: G09G 1/16, G09G 5/00, H04N 5/445, H04N 5/45

(54) **Display apparatus capable of simultaneously displaying a television picture and a compressed display page of character and graphics data**
Anzeigevorrichtung zur gleichzeitigen Darstellung eines Fernsehbildes und einer komprimierten Anzeigeseite mit Zeichendaten und grafischen Daten
Appareil d'affichage simultané d'une image de télévision et d'une page d'affichage comprimée comprenant des données de caractères et des données graphiques

(30) Priority: 24.07.1987 JP 186238/87
(43) Date of publication of application: 25.01.1989
(73) Proprietor: MATSUSHITA ELECTRIC INDUSTRIAL CO., LTD., Kadoma-shi, Osaka-fu, 571 (JP)
(72) Inventor: Sakamoto, Ken, Nagaokakyo-shi Kyoto (JP); Henmi, Hidemi, Ootsu-shi Shiga-ken (JP); Kondo, Tomoji, Takatsuki-shi Osaka (JP); Shimbo, Hiroyasu, Toyonaka-shi Osaka (JP); Fukuda, Shin, Hirakata-shi Osaka (JP)
(74) Representative: Tiedtke, Harro, Dipl.-Ing.

(56) References cited:
- EP-A- 0 131 321
- EP-A- 0 167 332
- DE-A- 3 209 876
- DE-C- 3 312 097
- US-A- 3 599 178
- US-A- 4 455 554
- Radio Mentor Elektronik rme 1977, Heft 8, Seite 334, "Monitorbild braucht 5 % Schirmfläche"
- Firmenschrift Intermetall semiconductors ITT 6251-249-1E, "Picture in Picture Processor (PPP)", August 1985
- Firmendruckschrift Intermetall semiconductors ITT, Best.-Nr. 6251-249-2E, "PIP 2250 Picture in Picture Processor", Edition 1985/9 (September 1985)
- Firmendruckschrift semiconductors ITT, "Literaturverzeichnis 7 - Documentation List 7", gültig ab Februar 1986
- Zeitschrift ntz, Band 34 (1981), Heft 11, Seiten 776-780

## Description

### BACKGROUND OF THE INVENTION

The present invention relates to a character and graphics data display apparatus capable of displaying a television picture and/or character and graphics data which are received in encoded form carried by a signal such as a television signal, for example contained in the vertical blanking intervals of a television signal, and for displaying the decoded data.

In recent years, various forms of television broadcasting multiplex systems have been envisaged, which utilize broadcast radio waves. Of these, a television character multiplex broadcasting called the teletext system has been put into practical application for domestic use, whereby character and graphics data concerning news, weather reports, stock market conditions etc. can be displayed by a home television receiver. The term "character and graphics data" as used herein signifies data representing characters and/or numerals, or graphic images, or a combination of these. Another system, called videotext has also been put into practice, in which the public telephone lines are used to transmit character and graphics data to be displayed on television receiver screens.

According to document EP-A-0 167 332 data are sent from a data center to be displayed by a user terminal. The terminal can be set in a multi-image mode in which four small images are displayed together. One or more of these small images can be held fixed. In document US-A-4 455 554 a word processing system is shown in which an full page of hard copy text can be displayed as a picture on less than the entire CRT screen. Data representing characters are therefore compressed for the purpose of display.

In document US-A-3 599 178 a method is shown whereby video data from a storage medium are compressed, such that data for a plurality of character and graphics data images can be written into a display memory having a storage capacity for only the data of one full-size display picture. The plurality of images can thereby be displayed in compressed-size form simultaneously. Furthermore, in document EP-A-4-0 131 321 a dot area of 4x4 original pixels is converted to a single pixel of a compressed-size picture.

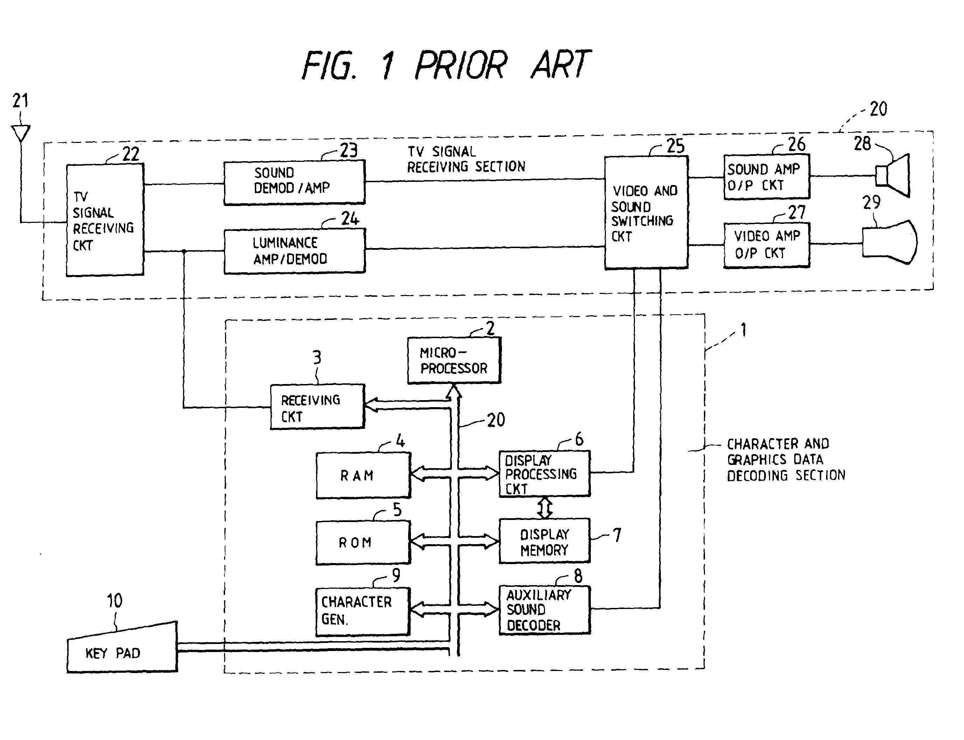

In the following, a prior art teletext character and graphics data display apparatus of the type described at the beginning will be outlined, referring to Fig. 1 In Fig. 1, numeral 1 denotes a character and graphics data decoding section for decoding character and graphics data which are encoded in a television broadcast signal (e.g. encoded within the vertical blanking intervals) and processing the decoded data to produce a video signal which can be applied to drive a television display to display a selected part of that character and graphics data. As described in detail hereinafter, the character and graphics data includes display control data which designates for example the display density with which the character and graphic picture data are to be displayed. A portion of this data which can be displayed at one time on the television screen is generally referred to as a data "page", and the received character and graphics data consists of a plurality of such pages which can be selected by the user as described in the following. Numeral 2 denotes a microprocessor for controlling the character and graphics data decoding section 1 and executing decoding operations. Commands and data are transferred between the microprocessor 2 and other circuits over a bus 20. A receiver circuit 3 serves to extract character and graphics data from a television signal, as digital data. A RAM 4 functions to store the received character and graphics data and to provide a working region for operation of the microprocessor 2. Numeral 5 denotes a ROM which stores a program for controlling the operation of the microprocessor 2. Numeral 7 denotes a display memory, for storing character and graphic picture data that have been decoded by the microprocessor 2. Numeral 6 denotes a display processing circuit for synthesizing an RGB color video signal from the character and graphic picture data that has been stored in the display memory 7. Acharactergenerator 9 is utilized during decoding of the character and graphics data into character and graphic picture data. Numeral 8 denotes an auxiliary sound decoder for processing auxiliary sound data which may be contained in the character and graphics data. Numeral 10 denotes a key pad, actuatable by the user for designating selection by the character and graphics data decoding section 1 of specific data, e.g. overall selection of desired character and graphics data, and selection of pages of that data to be displayed. Numeral 20 denotes a television signal receiving section, 21 denotes an antenna, 22 a television signal receiving circuit, 23 an audio demodulator/amplifier circuit, and 24 a luminance amplifier/chrominance demodulator circuit. Numeral 25 denotes a video and audio switching circuit which is operable for selecting either the video and sound signals from the sound demodulator/amplifier circuit 23 and luminance amplifier/demodulator circuit 24, or for superimposing the RGB signal from the character and graphics data decoding section 1 upon the video signal from the luminance amplifier/demodulator circuit 24 while selecting the sound signal from the sound demodulator/amplifier circuit 23, or for selecting the auxiliary sound signal and the RGB signal from the character and graphics data decoding section 1 (in the event that there is auxiliary sound information present and there is no sound signal being produced from the sound demodulator/amplifier circuit 23). The selected sound and video signals are thus derived by the selector circuit 25. The resulting output sound signal and output video signal from the video and sound signal switching circuit 25 are respectively supplied to a sound amplifier output circuit 26 and a video amplifier output circuit 27, to drive a loudspeaker 28 and a display device 29 respectively.

The operation of this prior art character and graphics data display apparatus is as follows. A television signal that is received from the antenna 21 is demodulated by the television signal receiving circuit 22 of the television signal receiving section 20, to derive a television sound and video signal respectively. The television video signal is supplied to the receiving circuit 3 of the character and graphics data decoding section 1, whereby character and graphics data are extracted from that video signal. The user can select desired data to be displayed, from among a variety of information constituting the latter character and graphics data, by actuating the keypad 10 to designate to the microprocessor 2 the data which are to be selected. The microprocessor 2 responds by selecting the specified character and graphics data and stores that data in the RAM 4, and also executes decoding processing of the selected character and graphics data in accordance with the stored program held in the ROM 5, to obtain character and graphic picture data which is in a suitable format for subsequent transfer to be displayed by the display device 29, and temporarily stores this character and graphic picture data in the display memory 7. If the character and graphics data contains data which specify as corresponding code values certain predetermined patterns such as shapes of characters or numerals etc. (as described hereinafter), then the character generator 9 is utilized in this data decoding processing for generating corresponding character pattern data, as part of the character and graphic picture data that are stored in the display memory 7. The display processing circuit 6 operates on this stored character and graphic picture data to generate the aforementioned RGB color video signal that is supplied to the video and sound signal switching circuit 25.

If the stored character and graphics data in the RAM 4 contain auxiliary sound data, then this is converted by the auxiliary sound decoder 8 into a suitable audio signal for transfer through the video and sound signal switching circuit 25 to the loudspeaker 28.

When normal television picture is to be displayed, the sound and video signals produced by the television signal receiving section 20 are respectively transferred by the video and sound signal switching circuit 25 to drive the loudspeaker 28 and display device 29 respectively. When character and graphics data are to be displayed, the RGB signal from the character and graphics data decoding section 1 are selected by the video and sound signal switching circuit 25 to drive the display 29. In this condition, auxiliary sound signals are transferred to drive the loudspeaker 28, but only if there is no sound signal component in the television signal being received at that time. Thus the user can select either a normal television picture or a page of character and graphics data to appear on the display device 29.

It can be understood from the above that such a prior art character and graphics data display apparatus has the disadvantage that it is only possible to view (at one time) either a normal television picture or a character and graphics data display. While the user is operating the keypad 10 to select desired character and graphics data, it is not possible for the user to view a television picture. Furthermore, such a prior art apparatus also has the disadvantage that it is only possible to display a single page of character and graphics data on the display device 29 at one time.

The article "Monitorbild braucht 5% Schirmfläche" disclosed in RME 1977, issue 8, page 334 describes the superposition of a second smaller television picture on a main picture, the so-called PIP representation.

The ITT-publication "PIP 2250-Picture in Picture Processor", Edition 1985/9, shows a PIP-representation in conjunction with teletext.

### SUMMARY OF THE INVENTION

It is an object of the present invention to overcome the disadvantages of the prior art described above, by providing a character and graphics data display apparatus whereby a television picture and a page of character and graphics data can be displayed simultaneously by a display device.

This object is achieved by a character and graphics data display apparatus as claimed in claim 1.

### BRIEF DESCRIPTION OF THE DRAWINGS

Fig. 1 is a general block system diagram of a prior art character and graphics data display apparatus;
Fig. 2 is a general block system diagram of a preferred embodiment of a character and graphics data display apparatus according to the present invention;
Fig. 3 shows an example of a page of character and graphics data displayed with the display density being as specified by display control data;
Fig. 4 shows an example of a page of character and graphics data displayed in compressed form in combination with a television picture:
Fig. 5 is a diagram showing an example of configuration of character and graphics data:
Fig. 6 is a diagram for assistance in describing an example of compression of pattern data by first compression means of the described embodiment;
Fig. 7 is a diagram for assistance in describing an example of compression of attribute data by third compression means of the described embodiment; and,
Fig. 8 shows an example of simultaneous display of a plurality of pages of character and graphics data on a display screen.

### DESCRIPTION OF PREFERRED EMBODIMENTS

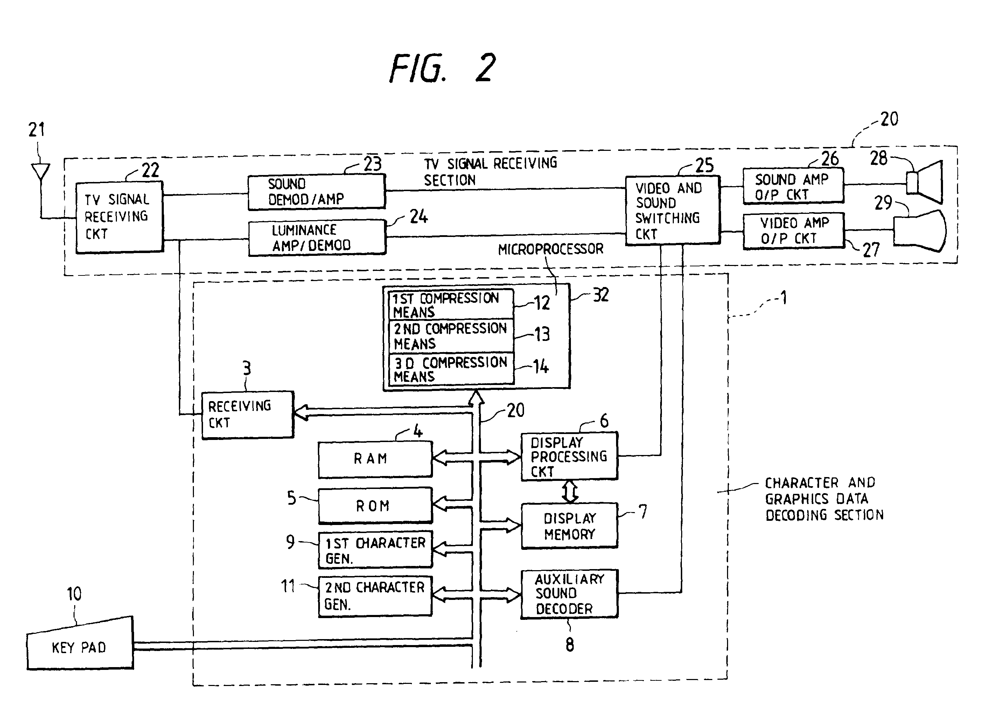

Fig. 2 shows the general configuration of an embodiment of a character and graphics data display apparatus according to the present invention. The overall arrangement is similar to that of the prior art example of Fig. 1 described above, and components corresponding to components in that prior art example are designated by corresponding reference numerals. Detailed description of these will be omitted. In addition to a receiving circuit 3, a RAM 4, a ROM 5, a display processing circuit 6, a display memory 7, an auxiliary sound decoder 8, and a character generator 9 (referred to in the following as the first character generator), a character and graphics data decoding section 31 indudes a second character generator 11 for generating character patterns in compressed form, and has a microprocessor 32 with functions to implement a first compression means 12, a second compression means 13 and a third compression means 14, described in detail hereinafter. For precision of a description, the RAM 4 will be referred to as a "data memory", to distinguish this from the display memory 7. The second character generator 11 operates in basically the same manner as the first character generator 9. However whereas the first character generator 9 generates data for producing display of patterns (e.g. representing characters or numerals) of predetermined display size for the case in which a single page of character and graphics data occupies the entire display screen of the display device 29, the second character generator 11 generates data for producing display of these patterns in compressed form, i.e. reduced display size as is required when a page of character and graphics data occupies only a portion of the display screen of the display device 29.

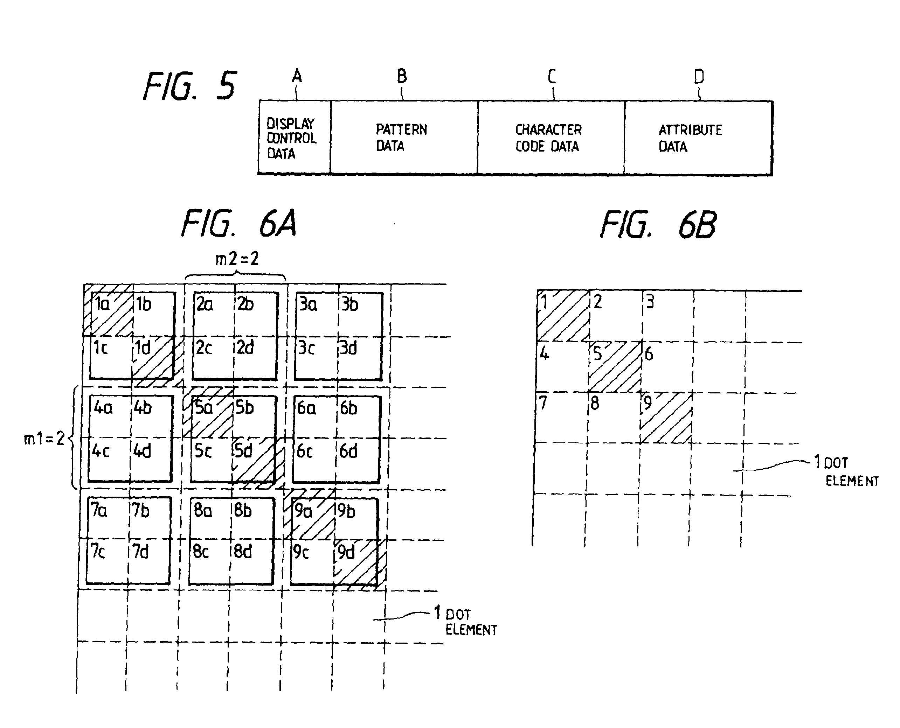

The format of the character and graphics data derived by the receiving circuit 3 is illustrated in Fig. 5, and consists of data A which specifies the display density for the character and graphics data, pattern data B which represents patterns that are to be formed by arrangements of arbitrary picture elements of the display device, character code data C consisting of code values corresponding to predetermined pattern shapes (e.g. of characters, numerals etc.) which are converted to pattern data by a character generator, and attribute data D which specifies the display attributes for patterns to be displayed (e.g. pattern color, background color, etc.).

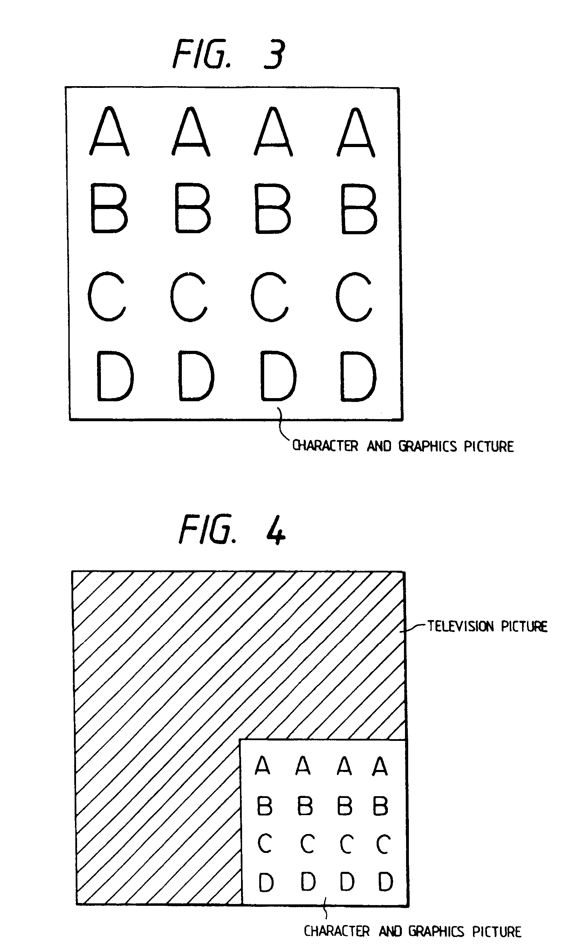

It is possible to operate this embodiment in essentially the same manner as the prior art example of Fig. 1. In this case, the user can operate the keypad 10 to display either a page of desired character and graphics data which occupies the entire display screen of the display device 29, with the display density (which determines the number of picture elements utilized to form each pattern on the display screen) being as specified by the display control data A (for example as illustrated in Fig. 3) or a normal television picture, as described hereinabove referring to Fig. 1.

However this embodiment also permits the user to designate display of character and graphics data in compressed form, to enable a page of character and graphics data to be displayed simultaneously with a television picture (for example as illustrated in Fig. 4). In this case, conversion processing is executed on the character and graphics data supplied from the receiving circuit 3, to display the data contents with a display density that is different from that specified by the display control data A. To do this, it is necessary to execute compression of the pattern data B shown in Fig. 5, and a method of performing this will be described referring to Fig. 6A which graphically illustrates an example of part of the pattern data prior to compression, and Fig. 6B which shows the result of compressing that data. In this example, the "dot" elements of the pattern represented by the pattern data B, (each of these dot elements corresponding to a specific minimum-size display element of the display device 29) are processed as sets which respectively correspond to rectangular arrays of picture elements, referred to in the following as picture segments, each of which has a vertical height (designated herein as m₁) equal to 2 picture elements in this example, and a horizontal width (designated as m₂) equal to 2 picture elements in this example, i.e. each of the sets represents a 2 x 2 element array of 4 picture elements. Each of these sets of dot elements of the pattern data are compressed to a single dot element, as shown in Fig. 6B. That is, the picture segment corresponding to dot elements 1a, 1b, 1c and 1d shown in Fig. 6A is compressed to the single dot element 1 shown in Fig. 6B. Similar compression is executed for the set of dot elements 2a, 2b, 2c, 2d, the set 3a, 3b, 3c, 3d and so on. Each of the dot elements of the pattern data shown in Fig. 6A represents a bi-level bit status, i.e. a "1" or "0" state, for example respectively corresponding to an "ON" display state (normally a "bright" state) and an "OFF" display state (normally a "dark" state). The "ON" display state is indicated in Figs. 6A, 6B by each a hatched-line square, while the "OFF" state is indicated by each blank square. Pattern compression is performed in this embodiment as follows. If at least one dot element of one of the aforementioned sets represents the display "ON" state, then the single dot element corresponding to the set after compression is set as the "ON" state. If all of the dot elements of a set represent the "OFF" display state, then the corresponding single dot element following compression is set as the "OFF" state. The resultant data elements from this compression conversion processing will form part of data referred to as the compressed character and graphic picture data.

The above operation is clearly illustrated in Figs. 6A, 6B. For example after compression, the single dot element 1 in Fig. 6B corresponding to the set 1a,...1d in Fig. 6A is placed in the "ON" state, since two dot elements 1a, 1d of that set are in the "ON" state. Similarly, the dot element 2 in Fig. 6B represents the display "OFF" state, since all of the dot elements of the corresponding set 2a,....2d represent the display "OFF" state. In this way the diagonal line pattern represented by the data in Fig. 6A is compressed to the diagonal line pattern represented by the data shown in Fig. 6B.

In this embodiment, the display "ON" state is represented by a logic "1" data value, and the display "OFF" state by logic "0". The above compression operation is executed for each of the dot element sets 1a,...1d, 2a,....2d, etc. by taking the logical sum (i.e. the OR function) of the states of the dot elements in that set and establishing the resultant state as that of the corresponding compressed dot element. Thus since for example the dot elements of the set 1a to 1d shown in Fig. 6A consist of two "ON" state elements and two "OFF" state elements, the logical sum of these states represents the display "ON" state, which is thus established for the corresponding element 1 in the compressed data shown in Fig. 6B, as described above.

Similarly, the logical sum of the states of the dot element 2a to 2b in Fig. 6A (all "OFF" state, i.e. all "0" level) is the "OFF" state which is thus established for the corresponding dot element 2 in the compressed data shown in Fig. 6B. Similar compression processing is executed for the other sets of dot elements corresponding to respective picture segments, shown in Fig. 6A.

The above compression processing is executed by the first compression means 12 of the microprocessor 32, and the resultant compressed data are stored in the display memory 7.

In the case of the character code data C shown in Fig. 5, the data are supplied under the control of the second compression means 13 of the microprocessor 32 to the second character generator 11, which responds by generating compressed character/graphics pattern data (e.g. for producing the compressed characters shown in Fig. 4), which are stored in the display memory 7.

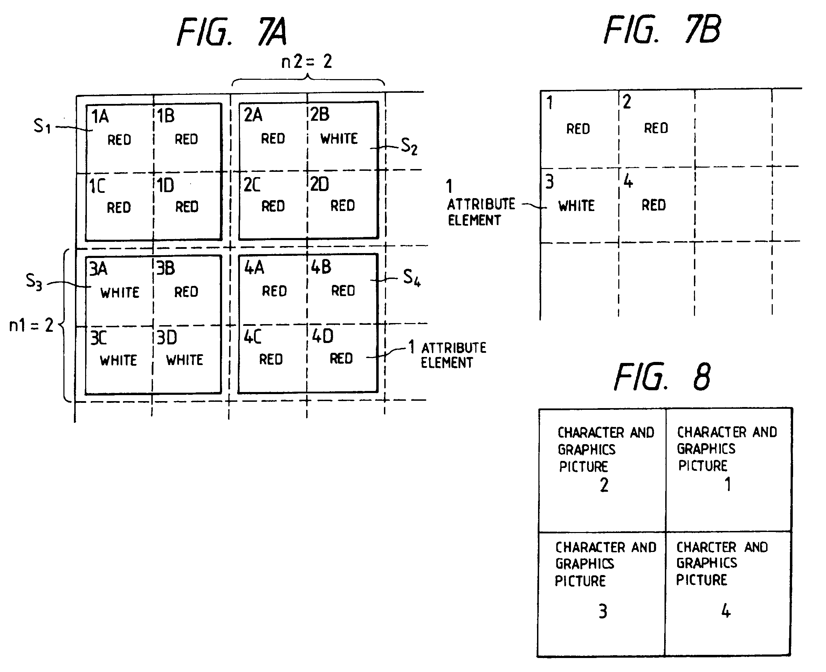

The compression processing of the attribute data D shown in Fig. 5 will be described referring to Figs. 7A, 7B. As in the case of the pattern data described above, the attribute data are processed for compression as sets S₁, S₂,....., of attribute data elements, 1A to 1C, 2A to 2D, and so on. Each of these attribute data elements defines an attribute (in this example, display color) for a specific display region made up of one or more display elements of the display device 29, and each of the aforementioned sets of attribute data elements corresponds to a display segment made up of a rectangular array of these display regions. Each of the sets S₁, S₂,... is formed of n₁ attribute elements vertically by n₂ attribute elements horizontally as shown in Fig. 7A, where n₁ and n₂ are positive integers each of which in this example is 2, and each of the attribute element sets S₁, S₂,.....is compressed, i.e. converted to a single attribute element of the compressed character and graphics picture data. Compression is executed by determining, for each of these attribute element sets S₁, S₂, etc., the color which is specified by the greatest number of elements within that array (if such a majority exists), and assigning that color to the corresponding attribute element of the compressed data shown in Fig. 7B. Thus for example, since the color red is specified by three of the attribute elements in picture segment S₂, the corresponding attribute element of the compressed attribute data specifies red. Similar processing is executed for each of the other element arrays of the attribute data. If a "majority color" decision cannot be made, due to any of the sets S₁, S₂, etc., containing two pairs of attribute elements for mutually different colors, or four attribute elements for respectively different colors, then the color of an element in a fixedly predetermined position of the set (for example position 1B, 2B, 3B, 4B, ... in Fig. 6) is arbitrarily established as the color to be specified by the corresponding attribute data element in the compressed data shown in Fig. 7B. Since each of these sets corresponds to only a very small display area, this is not a serious problem in practice.

This attribute data compression processing is carried out by the third compression means 14 of the microprocessor 32, and the results are stored in the display memory 7.

To display a compressed character and graphics data picture together with a television picture, as shown in Fig. 4 for example, the contents thus stored in the display memory 7 as described above are read out and processed by the display processing circuit 6 to obtain an RGB color signal. This is combined in the switching circuit 25 with the television video signal produced from the amplifier/demodulator circuit 24, to produce a video signal for providing a combined display of the form shown in Fig. 4, by inserting the aforementioned RGB color signal into the television video signal at appropriate timings in specific horizontal scanning intervals. Methods of implementing such combination of video signals from different sources to obtain a combined display picture are well known in the art, so that no detailed description will be given herein.

In the example described above, a single page of character and graphics data are displayed in combination with a television picture. However it is equally possible to store a plurality of pages of character and graphics data (containing respectively different or mutually identical data) in the display memory 7 and to display these pages simultaneously by the display device 29, i.e. to occupy the entire display screen as illustrated in Fig. 8.

In the above description it is assumed that the quantities m₁, m₂, n₁, n₂, each have the value 2. However it should be noted that various other values could be utilized.

It should also be noted that the attribute data can also consist of data specifying foreground color, background color, flashing, concealment, etc., and that the method of compression described above is applicable to all of these.

## Claims

1. A character and graphics data display apparatus capable of displaying a television picture and/or character and graphics data, comprising:
a display device (**29**) having a screen,
receiving circuit means (**3, 22**) for receiving a television signal carrying encoded therein character and graphics data including display control data,
data memory means (**4**) for storing said received character and graphics data,
data decoding means for decoding said received character and graphics data to obtain character and graphics picture data,
display memory means (**7**) for temporarily storing said character and graphics picture data,
display processing circuit means (**6**) for processing said stored character and graphics picture data into a suitable form for display by said display device (**29**) such that a page will occupy only a portion of the screen of said display device (**29**) when being displayed, and
conversion means (**32**) for converting a page of said received character and graphics data stored in said data memory means (**4**) into a page of compressed character and graphics picture data to be stored in said display memory means (**7**),
said conversion means (**32**) being adapted to perform compression processing in accordance with the type (B, C, D) of the received character and graphics picture data said type defining pattern, character code or attribute data;
wherein a signal representing said television picture and a signal representing said page of said compressed character and graphics picture data are fed to a signal switching means (**25**) controlled such that a resulting video signal is obtained which causes said television picture and said page of said compressed character and graphics picture data to be displayed simultaneously on the screen of said display device (**29**).

2. A character and graphics data display apparatus according to claim 1, **characterized in that** a first compression means (**12**) of said conversion means (**32**) converts each of a plurality of sets of pattern data elements (**1a, 1b, 1c, 1d, 2a, ...**), respectively corresponding to rectangular arrays of m₁ by m₂ of said picture to be displayed, to a corresponding single pattern data element (**1, 2, ...**) in said page of said compressed character and graphics picture data, where m₁ and m₂ are positive integers.

3. A character and graphics data display apparatus according to claim 2, **characterized in that** each of said pattern data elements (**1a, 1b, 1c, 1d, 2a, ...**) selectively represents an "**ON**" or "**OFF**" display state of a corresponding element of said picture to be displayed and that said conversion is executed for each of said sets by establishing the display "**ON**" state for said corresponding single pattern data element (**1, 2, ...**) if at least one pattern data element (**1a, 1b, 1c, 1d, 2a, ...**) of said each set represents the display "**ON**" state and establishing the display "**OFF**" state for said corresponding single pattern data element (**1, 2, ...**) if all pattern data elements (**1a, 1b, 1c, 1d, 2a, ...**) of said each set represents the display "**OFF**" state.

4. A character and graphics data display apparatus according to claim 1, **characterized in that** when said character and graphics data includes character code data (**C**), said character code data (**C**) are supplied under the control of a second compression means (**13**) of said conversion means (**32**) to a character generator (**11**) which responds by generating compressed character pattern data.

5. A character and graphics data display apparatus according to claim 1, **characterized in that** when said character and graphics data includes attribute data (**D**) for specifying display attributes, said attribute data (**D**) comprising attribute data elements (**1A, 1B, 1C, 1D, 2A, ...**) respectively corresponding to predetermined regions of said picture to be displayed, a third compression means (**14**) of said conversion means (**32**) converts each of a plurality of sets (**S**_{**1**}**, S**_{**2**} **...**) of said attribute data elements (**1A, 1B, 1C, 1D, 2A, ...**), respectively corresponding to rectangular arrays of n₁ by n₂ of said picture to be displayed, to a corresponding single attribute data element (**1, 2, ...**) in said page of said compressed character and graphics picture data, where n₁ and n₂ are positive integers.

6. A character and graphics data display apparatus according to claim 5, **characterized in that** said conversion is executed for each of said sets (**S**_{**1**}**, S**_{**2**} **...**) of attribute data elements (**1A, 1B, 1C, 1D, 2A, ...**) by determining a type of attribute data element which is in the majority in said each set (**S**_{**1**}**, S**_{**2**} **...**) of attribute data elements (**1A, 1B, 1C, 1D, 2A, ...**) and assigning said type to said corresponding single attribute data element (**1, 2, ...**).

## Patentansprüche

1. Zeichen- und Graphikdaten-Anzeigevorrichtung zum Anzeigen eines Fernsehbildes und/oder von Zeichen- und Graphikdaten, mit:
einer Anzeigevorrichtung (29) mit einem Bildschirm,
einer Empfangsschaltungseinrichtung (3, 22) zum Empfangen eines Fernsehsignals mit darin codierten Zeichen- und Graphikdaten einschließlich Anzeigesteuerdaten,
einer Datenspeichereinrichtung (4) zum Speichern der empfangenen Zeichen- und Graphikdaten,
einer Datendecodiereinrichtung zum Decodieren der empfangenen Zeichen- und Graphikdaten, um Zeichen- und Graphikbilddaten zu erhalten,
einer Anzeigespeichereinrichtung (7) zum zwischenzeitlichen Speichern der Zeichen- und Graphikbilddaten,
einer Anzeigeverarbeitungs-Schaltungseinrichtung (6) zum Verarbeiten der gespeicherten Zeichen- und Graphikbilddaten in eine zur Anzeige durch die Anzeigevorrichtung (29) geeignete Art, so daß eine Seite bei einer Anzeige nur einen Teil des Bildschirms der Anzeigevorrichtung (29) belegt, und
einer Umwandlungseinrichtung (32) zum Umwandeln einer Seite mit den empfangenen Zeichen- und Graphikdaten, die in der Datenspeichereinrichtung (4) gespeichert sind, in eine Seite mit verdichteten Zeichen- und Graphikbilddaten, die in die Anzeigespeichereinrichtung (7) zu speichern ist,
wobei die Umwandlungseinrichtung (32) ausgestaltet ist zum Durchführen einer Verdichtungsverarbeitung in Übereinstimmung mit der Art (B, C, D) der empfangenen Zeichen- und
Graphikbilddaten, wobei durch die Art Muster-, Zeichencodeoder Attributdaten definieit werden;
wobei ein das Fernsehbild darstellendes Signal und ein die Seite mit den verdichteten Zeichen- und Graphikbilddaten darstellendes Signal einer Signalschalteinrichtung (25) zugeführt werden, die derart gesteuert wird, daß ein resultierendes Videosignal erhalten wird, das eine gleichzeitige Anzeige des Fernsehbildes und der Seite mit den verdichteten Zeichen- und Graphikbilddaten auf dem Bildschirm der Anzeigevorrichtung (29) bewirkt.

2. Zeichen- und Graphikdaten-Anzeigevorrichtung nach Anspruch 1,
**dadurch gekennzeichnet, daß**
eine erste Verdichtungseinrichtung (12) der
Umwandlungseinrichtung (32) jeden aus einer Vielzahl von Sätzen von Musterdatenelementen (1a, 1b, 1c, 1d, 2a, ...), die jeweils rechteckigen Feldern m₁ mal m₂ des anzuzeigenden Bildes entsprechen, in ein entsprechendes einzelnes Musterdatenelement (1, 2, ...) auf der Seite mit den verdichteten Zeichen- und Graphikbilddaten umwandelt, wobei m₁ und m₂ positive ganze Zahlen sind.

3. Zeichen- und Graphikdaten-Anzeigevorrichtung nach Anspruch 2,
**dadurch gekennzeichnet, daß**
jedes der Musterdatenelemente (1a, 1b, 1c, 1d, 2a, ...) einen "EIN"- oder "AUS"-Anzeigezustand eines entsprechenden Elements des anzuzeigenden Bildes ausgewählt darstellt und daß die Umwandlung für jeden der Sätze durch Festlegen des Anzeige"EIN"-Zustandes für das entsprechende einzelne
Musterdatenelement (1, 2, ...) ausgeführt wird, falls zumindest ein Musterdatenelement (1a, 1b, 1c, 1d, 2a, ...) aus demjenigen Satz den Anzeige-"EIN"-Zustand darstellt, und durch Festlegen des Anzeige-"AUS"-Zustandes für das entsprechende einzelne Musterdatenelement (1, 2 ...) ausgeführt wird, falls alle Musterdatenelemente (1a, 1b, 1c, 1d, 2a, ...) aus demjenigen Satz den Anzeige-"AUS"-Zustand darstellen.

4. Zeichen- und Graphikdaten-Anzeigevorrichtung nach Anspruch 1,
**dadurch gekennzeichnet, daß**
wenn die Zeichen- und Graphikdaten Zeichencodedaten (C) enthalten, die Zeichencodedaten (C) unter der Steuerung einer zweiten Verdichtungseinrichtung (13) der Umwandlungseinrichtung (32) zu einem Zeichengenerator (11) geführt werden, der durch Erzeugen von verdichteten Zeichenmusterdaten reagiert.

5. Zeichen- und Graphikdaten-Anzeigevorrichtung nach Anspruch 1,
**dadurch gekennzeichnet, daß**
wenn die Zeichen- und Graphikdaten Attributdaten (D) zum Festlegen von Anzeigeattributen enthalten, wobei die Attributdaten (D) Attributdatenelemente (1A, 1B, 1C, 1D, 2A, ...) umfassen, die jeweils vorbestimmten Bereichen des anzuzeigenden Bildes entsprechen, eine dritte Verdichtungseinrichtung (14) der Umwandlungseinrichtung (32) jeden aus einer Vielzahl von Sätzen (S₁, S₂, ...) der Attributdatenelemente (1A, 1B, 1C, 1D, 2A, ...), die jeweils rechteckigen Feldern n₁ mal n₂ des anzuzeigenden Bildes entsprechen, in ein entsprechendes einzelnes Attributdatenelement (1, 2, ...) auf der Seite mit den verdichteten Zeichen- und Graphikbilddaten umwandelt, wobei n₁ und n₂ positive ganze Zahlen sind.

6. Zeichen- und Graphikdaten-Anzeigevorrichtung nach Anspruch 5,
**dadurch gekennzeichnet, daß**
die Umwandlung für jeden der Sätze (S₁, S₂, ...) von Attributdadenelementen (1A, 1B, 1C, 1D, 2A, ...) durch Bestimmen eines Typs von Attributdatenelement, das in demjenigen Satz (S₁, S₂ ...) von Attributdatenelementen (1A, 1B, 1C, 1D, 2A, ...) in der Mehrzahl ist, und durch Zuordnen dieses Typs zu dem entsprechenden einzelnen Attributdatenalement (1, 2, ...) ausgeführt wird.

## Revendications

1. Appareil d'affichage de données de caractères et de données graphiques apte à afficher une image de télévision et/ou des données de caractères et des données graphiques, comprenant :
- un dispositif d'affichage (29) comportant un écran,
- un circuit de réception (3, 22) pour recevoir un signal de télévision transportant des données de caractères et des données graphiques qui y sont codées et qui comprennent des données de commande d'affichage,
- une mémoire (4) de données pour stocker lesdites données de caractères et lesdites données graphiques reçues,
- des moyens de décodage de données pour décoder lesdites données de caractères et données graphiques reçues afin d'obtenir des données de caractères et des données d'images graphiques,
- une mémoire d'affichage (7) pour stocker momentanément lesdites données de caractères et données d'images graphiques,
- un circuit (6) de traitement d'affichage pour traiter lesdites données de caractères et données d'images graphiques stockées en leur donnant une forme appropriée pour être affichées par ledit dispositif d'affichage (29) de telle sorte qu'une page n'occupe qu'une partie de l'écran dudit dispositif d'affichage (29) pendant l'affichage, et
- un moyen de conversion (32) pour convertir une page desdites données de caractères et données graphiques reçues, mémorisées dans ladite mémoire de données (4), en une page de données comprimées de caractère et d'images graphiques devant être stockées dans ladite mémoire d'affichage (7),
ledit moyen de conversion étant apte à effectuer un traitement de compression qui dépend du type (B, C, D) de données de caractère et d'images graphiques reçues, ledit type définissant une confïguration. un code de caractère ou une donnée de caractéristique,
dans lequel un signal représentant ladite image de télévision et un signal représentant ladite page de données comprimées de caractères et d'images graphiques sont envoyés à un moyen (25) de commutation de signal commandé de manière à obtenir un signal vidéo résultant qui fait afficher simultanément sur l'écran dudit dispositif d'affichage (29) ladite image de télévision et ladite page de données comprimées de caractères et d'images graphiques.

2. Appareil d'affichage de données de caractères et de données graphiques selon la revendication 1, caractérisé en ce qu'un premier moyen de compression (12) dudit moyen de conversion (32) convertit chaque ensemble d'une pluralité d'ensembles d'éléments (1a, 1b, 1c, 1d, 2a, ...) de données de configuration, correspondant respectivement à des arrangements rectangulaires de m₁ x m₂ de ladite image à afficher, en un élément unique correspondant (1, 2, ..) de données de configuration dans ladite page de données comprimées de caractères et d'images graphiques, m₁ et m₂ étant des nombres entiers positifs.

3. Appareil d'affichage de données de caractères et de données graphiques selon la revendication 2, caractérisé en ce que chacun desdits éléments (1a, 1b, 1c, 1d, 2a, ...) de données de configuration représente sélectivement un état d'affichage "ACTIF" ou "INACTIF" d'un élément correspondant de ladite image à afficher et en ce que ladite conversion est effectuée pour chacun desdits ensembles par établissement de l'état d'affichage "ACTIF" pour ledit élément correspondant unique (1, 2, ..) de données de configuration si au moins un élément (1a, 1b, 1c, 1d, 2a, ...) de données de confïguration de chaque ensemble représente l'état d'affichage "ACTIF", et par établissement de l'état d'affichage "INACTIF" pour ledit élément correspondant unique (1, 2, ..) de données de configuration si tous les éléments (1a, 1b, 1c, 1d, 2a, ...) de données de configuration de chaque ensemble représentent l'état d'affichage "INACTIF".

4. Appareil d'affichage de données de caractères et de données graphiques selon la revendication 1, caractérisé en ce que lorsque lesdites données de caractères et lesdites données graphiques comprennent des données (C) de codes de caractères, lesdites données (C) de codes de caractères sont fournies, sous la commande d'un second moyen de compression (13) dudit moyen de conversion (32), à un générateur (11) de caractères qui réagit en générant des données comprimées de configuration de caractères.

5. Appareil d'affichage de données de caractères et de données graphiques selon la revendication 1, caractérisé en ce que lorsque lesdites données de caractères et lesdites données graphiques comprennent des données (D) de caractéristiques pour spécifier des caractéristiques d'affichage, lesdites données (D) de caractéristiques comprenant des éléments (1A, 1B, 1C, 1D, 2A, ...) de données de caractéristiques qui correspondent respectivement à des régions prédéterminées de ladite image à afficher, un troisième moyen de compression (14) dudit moyen de conversion (32) convertit chaque ensemble d'une pluralité d'ensembles (S1, S₂ ...) desdits éléments (1A, 1B, 1C, 1D, 2A, ...) de données de caractéristiques, correspondant respectivement à des arrangements rectangulaires de n₁ x n₂ de ladite image à afficher, en un élément unique correspondant (1, 2, ...) de données de caractéristiques dans ladite page de données comprimées de caractères et d'images graphiques, n₁ et n₂ étant des nombres entiers positifs.

6. Appareil d'affichage de données de caractères et de données graphiques selon la revendication 5, caractérisé en ce que ladite conversion est effectuée pour chaque ensemble desdits ensembles (S₁, S₂, ...) d'éléments (1A, 1B, 1C, 1D, 2A, ...) de données de caractéristiques par détermination du type d'élément de données de caractéristiques qui se trouve en majorité dans chaque ensemble (S₁, S₂, ...) d'éléments (1A, 1B, 1C, 1D, 2A, ...) de données de caractéristiques et par attribution dudit type audit élément unique correspondant (1, 2, ...) de données de caractéristiques.
